# EUROPÄISCHE PATENTANMELDUNG

(11) **EP 0 661 345 A1**
(43) Veröffentlichungstag der Anmeldung: **05.07.1995**
(21) Anmeldenummer: 94120072.7
(22) Anmeldetag: 19.12.1994
(51) Int. Cl.: C08L 65/00, C08L 45/00, C08L 51/00, C08L 53/02

(54) **Polymerlegierung**

(30) Priorität: 27.12.1993 DE 4344706
(71) Anmelder: HOECHST AKTIENGESELLSCHAFT, D-65929 Frankfurt am Main (DE); MITSUI PETROCHEMICAL INDUSTRIES, LTD., Tokyo (JP)
(72) Erfinder: Herrmann-Schönherr, Otto, Dr., D-64625 Bensheim (DE); Osan, Frank, Dr., D-65779 Kelkheim (DE)
(74) Vertreter: Aulmich, Gerhard, Dr.

(57) **Zusammenfassung**

Polymer-Legierung, enthaltend a) eines oder mehrere Cycloolefincopolymere und b) einen oder mehrere Typen von Kern-Schale-Partikeln und c) eines oder mehrere Blockcopolymere.

## Beschreibung

Die vorliegende Erfindung betrifft eine Polymer-Legierung enthaltend Cycloolefincopolymere (COC), Kern-Schale-Partikel und Blockcopolymere. Die erfindungsgemäße Polymer-Legierung ist schlagzäh und zeichnet sich durch eine hohe Biegefestigkeit und Reißdehnung aus.

Schlagzähe Polymere sind hinlänglich bekannt und für eine Vielzahl von Anwendungen geeignet (A.E. Platt, Rubber Modification of Plastics, Advances in Polymer Science, Seite 437).

Weiterhin ist bekannt, daß durch Legieren die Schlagzähigkeit und die Reißdehnung von Polymeren verbessert werden kann. So kann die Schlagzähigkeit von spröden Polymeren verbessert werden durch Legieren mit Polymersystemen, die ganz oder zum Teil aus Kautschuken mit niedrigen Glastemperaturen aufgebaut sind (Polymer News, Vol. 16 (1991), Seiten 198-206; D.R. Paul in Encyclopedia of Polymer Science, Pergamon Press, N.Y. (1989), S. 437).

Insbesondere wurden Kern-Schale-Partikel zur Schlagzähmodifikation vorgeschlagen (Res. Discl. 323, Seite 925-926; P.A. Lovell et al.; Polymer, 34 (1993) Seite 61; M. Lu et al., Polymer, 34 (1993) Seite 1874; C.B. Bucknall, Rubber-modified Plastics, Comprehensive Polymer Science, Pergamon Press (1989), Seite 27-49). Diese werden als Schlagzähmodifikatoren für z.B. PVC oder PMMA verwendet (Gächter/Müller Kunststoff-Additive Seite XXIX-XXXIV, Carl Hanser, München, 1983 und C.B. Bucknall, Rubber-modified Plastics, Comprehensive Polymer Science, Pergamon Press (1989), Seite 27-49). Da sich die mechanischen Eigenschaften von schlagzäh modifizierten Polymeren jedoch nicht additiv aus den Eigenschaften der Einzelkomponenten vorhersagen lassen (D.R. Paul et al. in Encyclopedia of Polymer Science, Vol. 12, 1984), ist die Schlagzähmodifikation von Polymeren eine weitgehend empirische Aufgabe. Dies bedeutet, daß Kern-Schale-Partikel für jedes schlagzäh zu modifizierende Polymer und jede Anwendung in aufwendigen Optimierungstests speziell maßgeschneidert werden müssen (J. Oshiima, Seni Gakkaishi, 48(5) (1992) Seite 274; M.Lu et al., Polymer, 34 (1993) Seite 1874). Entsprechend eignen sich kommerziell erhältliche Kern-Schale Partikel jeweils nur für ganz bestimmte Polymere und Anwendungen.

Es ist auch bekannt, spröde Polymere durch gleichzeitige Verwendung von Kern-Schale-Partikeln und Blockcopolymeren schlagzäh zu modifizieren (Polymer 28, 1703, 1987). Die gleichzeitige Verwendung von Kern-Schale-Partikeln und Blockcopolymeren kann jedoch zu einer Abnahme der Schlagzähigkeit führen, verglichen mit der Schlagzähigkeit, die bei ausschließlicher Verwendung von Kern-Schale-Partikeln erreicht wird.

Eine wesentliche Voraussetzung zur Erzielung ausreichender Schlagzähigkeiten ist eine gute Phasenanhaftung bzw. Mischbarkeit zwischen Matrixpolymer und dem kautschukhaltigen Polymer (D.R. Paul in Encyclopedia of Polymer Science Vol. 12 (1984) S.437; A.E. Platt in Comprehensive Polymer Science, Pergamon Press N.Y. (1989) S.437), C.B. Bucknall in Toughened Plastics, Applied Science Publishers, London (1977) S. 209-210; M. Lu et al., Polymer, 34 (1993) S. 1874).

Wie alle Polyolefine sind auch COC (EP 203 799, EP 283 164, EP 407 870, EP 485 893, EP 503 422, DD 777 317, DD 231 070, DD 246 903, EP 203 799, EP 283 164, EP 156 464) mit anderen Polymeren schlecht mischbar und weisen somit eine schlechte Phasenanhaftung an andere Polymere auf. Die Verträglichkeit und damit die Phasenanhaftung kann nach D.W. van Krevelen (Properties of Polymers, Elsevier, Amsterdam-Oxford-New York, 1976, Kap. VII) über den Löslichkeitsparameter Delta abgeschätzt werden, wobei man für COC Werte von ca. 13,5 J^{1/2}cm^{3/2} erhält. Diese Werte liegen deutlich unterhalb von denen für typische schlagzähmodifizierbare Polymere.

Somit war es zur Schlagzähmodifizierung von COC bislang notwendig diese mit dem kautschukhaltigen Polymer zu vernetzen (JP 92-170 453, JP 92-180 454, JP 92-356 353). Eine zuverlässige und reproduzierbare Einstellung der Morphologien und Vernetzungsgrade und der damit verbundenen Schlagzähigkeit und rheologischen Eigenschaften ist mit dieser Vorgehensweise schwer zu realisieren. Insbesondere hängt die Reproduzierbarkeit der genannten Eigenschaften empfindlich von Parametern wie z.B. Verarbeitungsbedingungen, Vernetzergehalt, Temperatur und Zeit ab.

Es bestand somit die Aufgabe ein schlagzähes Polymer bereitzustellen, welches die Nachteile des Standes der Technik vermeidet.

Überraschend wurde nun gefunden, daß Legierungen die COC, Kern-Schale-Partikel sowie Blockcopolymere enthalten, schlagzäh sind und eine gute Biegefestigkeit und Reißdehnung aufweisen. Insbesondere führen bereits niedrige Gehalte an Blockcopolymeren zu guten mechanischen Eigenschaften. Außerdem können COC mit einer Vielzahl verschiedenartiger Kern-Schale-Partikel schlagzäh modifiziert werden, ohne daß die Partikel aufwendig für das Polymer und die jeweilige Anwendung optimiert werden müssen. Außerdem können die Legierungen in technisch einfacher Weise verarbeitet werden.

Die vorliegende Erfindung betrifft somit eine Polymer-Legierung, dadurch gekennzeichnet, daß sie enthält a) eines oder mehrere Cycloolefincopolymere, b) einen oder mehrere Typen von Kern-Schale-Partikeln und c) eines oder mehrere Blockcopolymere.

Bevorzugt enthält die erfindungsgemäße Legierung ein COC, besonders bevorzugt ein COC, einen Typ von Kern-Schale-Partikeln und ein Blockcopolymeres.

Die für die Zwecke der Erfindung geeigneten Cycloolefincopolymere weisen Glastemperaturen auf zwischen 50 und 250° C, bevorzugt zwischen 100 und 200° C, besonders bevorzugt zwischen 100 und 150° C.

Die erfindungsgemäße Legierung enthält bevorzugt COC, die 0,1 - 99 Gew.-%, bezogen auf die Gesamtmasse des COC, an Struktureinheiten enthalten, die durch Polymerisation mindestens eines polycyclischen Olefins erhalten werden, welches bevorzugt die Formel I, II, III, IV, V oder VI aufweist, 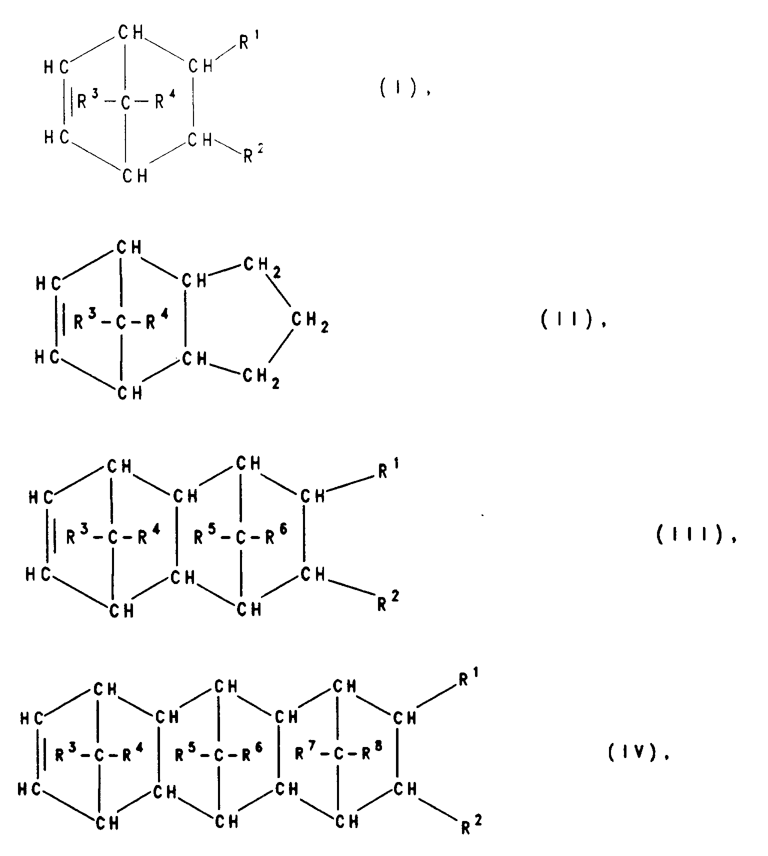 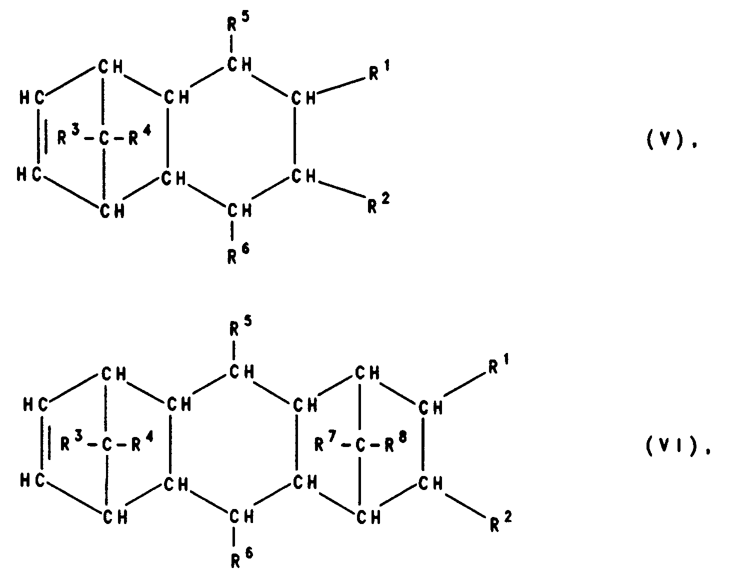
worin die Reste R¹, R², R³, R⁴, R⁵, R⁶, R⁷ und R⁸ gleich oder verschieden sind und ein Wasserstoffatom oder einen C₁-C₂₀-Kohlenwasserstoffrest wie einen linearen oder verzweigten C₁-C₈-Alkylrest, C₆-C₁₈-Arylrest, C₇-C₂₀-Alkylenarylrest, einen cyclischen oder acyclischen C₂-C₁₀-Alkenylrest bedeuten, oder zwei oder mehr Reste R¹ bis R⁸ einen Ring bilden, und die Reste R¹ bis R⁶ in den verschiedenen Formeln I bis VI eine unterschiedliche Bedeutung haben können,
0 bis 95 Gew.-%, bezogen auf die Gesamtmasse des COC an Struktureinheiten enthalten, die durch Polymerisation mindestens eines monocyclischen Olefins, insbesondere der Formel VII, erhalten werden 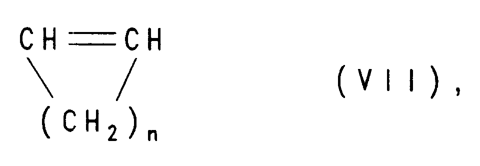
worin n eine Zahl von 2 bis 10 ist, und
0 bis 99 Gew.-%, bevorzugt 0,1 bis 99 Gew.-%, bezogen auf die Gesamtmasse des COC, an Struktureinheiten enthalten, die durch Polymerisation mindestens eines acyclischen Olefins, insbesondere der Formel VIII erhalten werden 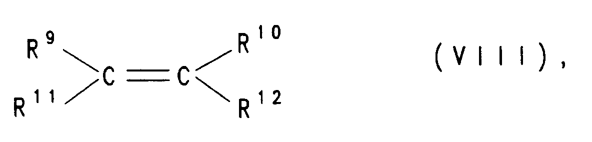
worin die Reste R⁹, R¹⁰, R¹¹ und R¹² gleich oder verschieden sind und ein Wasserstoffatom oder einen C₁-C₂₀-Kohlenwasserstoffrest wie einen C₁-C₈-Alkylrest oder C₆-C₁₄-Arylrest bedeuten.

Bevorzugt bestehen die Cycloolefincopolymere aus Struktureinheiten, die sich ableiten von einem oder mehreren Cycloolefinen, insbesondere polycyclischen Olefinen der Formeln I oder III, und einem oder mehreren acyclischen Olefinen, bevorzugt der Formel VIII, insbesondere α-Olefinen mit 2-20 C-Atomen. Insbesondere sind Cycloolefincopolymere bevorzugt, deren Struktureinheiten sich ableiten von einem polycyclischen Olefin der Formel I oder III und einem acylischen Olefin der Formel VIII bestehen.

Bevorzugt sind COC, die Struktureinheiten enthalten, die sich ableiten von polycyclischen Olefinen mit Norbornengrundstruktur, besonders bevorzugt Norbornen oder Tetracyclododecen. Bevorzugt sind auch COC, die Struktureinheiten enthalten, siesich ableiten von acyclischen Olefinen mit endständigen Doppelbindungen wie α-Olefine, besonders bevorzugt Ethylen oder Propylen. Besonders bevorzugt sind Norbornen/Ethylen- und Tetracyclododecen/Ethylen-Copolymere. Der Anteil an Struktureinheiten, die sich von acyclischen Olefinen der Formel VIII ableiten, beträgt 0 bis 99 Gew.-%, bevorzugt 5-80 Gew.-%, besonders bevorzugt 10-60 Gew.-%, bezogen auf die Gesamtmasse des COC.

Die COC werden bevorzugt hergestellt bei Temperaturen von -78 bis 150°C und einem Druck von 0,01 bis 64 bar, in Gegenwart eines Katalysators, welcher mindestens einen Cokatalysator und mindestens eine Übergangsmetallverbindung enthält. Als Übergangsmetallverbindungen eignen sich Metallocene, insbesondere stereorigide Metallocene, und Verbindungen auf Titan-und Vanadiumbasis. Solche Katalysatorsysteme und die Herstellung der für die Zwecke der Erfindung geeigneten COC sind z.B. beschrieben in EP 203 799, EP 283 14, EP 407 870, EP 485 893, EP 503 422, DD 777 317, DD 231 070, EP 203 799, auf die hiermit ausdrücklich Bezug genommen wird.

Beispiele für eingesetzte Übergangsmetallverbindungen sind:
rac-Dimethylsilyl-bis-(1-indenyl)-zirkondichlorid,
rac-Dimethylgermyl-bis-(1-indenyl)-zirkondichlorid,
rac-Phenylmethylsilyl-bis-(1-indenyl)-zirkondichlorid,
rac-Phenylvinylsilyl-bis-(1-indenyl)-zirkondichlorid,
1-Silacyclobutyl-bis (1-indenyl)-zirkondichlorid,
rac-Diphenylsilyl-bis-(1-indenyl)-hafniumdichlorid,
rac-Phenylmethylsilyl-bis-(1-indenyl)-hafniumdichlorid,
rac-Diphenylsilyl-bis-(1-indenyl)-zirkondichlorid,
rac-Ethylen-1,2-bis-(1-indenyl)-zirkondichlorid,
Dimethylsilyl-(9-fluorenyl)-(cyclopentadienyl)-zirkondichlorid,
Diphenylsilyl-(9-fluorenyl)-(cyclopentadienyl)-zirkondichlorid,
Bis(1-indenyl)-zirkondichlorid,
Diphenylmethylen-(9-fluorenyl)-cyclopentadienylzirkondichlorid,
Isopropylen-(9-fluorenyl)-cyclopentadienyl-zirkondichlorid,
Phenylmethylmethylen-(9-fluorenyl)-cyclopentadienyl-zirkondichlorid,
Isopropylen-(9-fluorenyl)-(1-(3-isopropyl)cyclopentadienyl)-zirkondichlorid,
Isopropylen-(9-fluorenyl)(1-(3-methyl)cyclopentadienyl)-zirkondichlorid,
Diphenylmethylen-(9-fluorenyl)(1-(3-methyl)cyclopentadienyl)-zirkondichlorid,
Methylphenylmethylen-(9-fluorenyl)(1-(3-methyl)cyclopentadienyl)-zirkondichlorid,
Dimethylsilyl-(9-fluorenyl)(1-(3-methyl)-cyclopentadienyl)-zirkondichlorid,
Diphenylsilyl-(9-fluorenyl)(1-(3-methyl)cyclopentadienyl)-zirkondichlorid,
Diphenylmethylen-(9-fluorenyl)(1-(3-tert.-butyl)cyclopentadienyl)-zirkondichlorid,
Isopropylen-(9-fluorenyl)(1-(3-tert.-butyl)cyclopentadienyl)-zirkondichlorid,
Isopropylen-(cyclopentadienyl-(1-indenyl)-zirkondichlorid,
Diphenylcarbonyl-(cyclopentadienyl)-(1-indenyl)-zirkondichlorid,
Dimethylsilyl-(cyclopentadienyl)-(1-indenyl)-zirkondichlorid,
Isopropylen-(methylcyclopentadienyl)-(1-indenyl)-zirkondichlorid,
4-(η⁵-cyclopentadienyl)-4,7,7-trimethyl-(η⁵-4,5,6,7-tetrahydroindenyl)zirkondichlorid,
4-(η⁵-3-methylcyclopentadienyl)-4,7,7-trimethyl-(η⁵-4,5,6,7-tetrahydroindenyl)zirkondichlorid,
4-(η⁵-3-isopropylcyclopentadienyl)-4,7,7-trimethyl-(η⁵-4,5,6,7-tetrahydroindenyl)zirkondichlorid,
4-(η⁵-3-methylcyclopentadienyl)-4,7-dimethyl-7-phenyl-(η⁵-4,5,6,7-tetrahydroindenyl)zirkondichlorid,
4-(η⁵-3-methylcyclopentadienyl)-4,7-dimethyl-7-n-butyl-(η⁵-4,5,6,7-tetrahydroindenyl)zirkondichlorid,
4-(η⁵-cyclopentadienyl)-4,7-dimethyl-7-n-butyl-(η⁵-4,5,6,7-tetrahydroindenyl)-zirkondichlorid,
4-(η⁵-cyclopentadienyl)-2,4,7,7-tetramethyl-(η⁵-4,5,6,7-tetrahydroindenyl)-zirkondichlorid, und analoge Hafnocene, Titantetrachlorid, VOCl₃,
VOCl₂(OCH₃), VOCl₂(OC₂H₅) und VOCl(OC₂H₅)₂.

Bevorzugt sind dabei:
rac-Dimethylsilyl-bis-(1-indenyl)-zirkondichlorid,
rac-Phenylmethylsilyl-bis-(1-indenyl)-zirkondichlorid,
rac-Phenylvinylsilyl-bis-(1-indenyl)-zirkondichlorid,
rac-Diphenylsilyl-bis-(1-indenyl)-zirkondichlorid,
rac-Ethylen-1,2-bis-(1-indenyl)-zirkondichlorid,
Isopropylen-(cyclopentadienyl)-(1-indenyl)-zirkondichlorid,
Diphenylcarbonyl-(cyclopentadienyl)-(1-indenyl)-zirkondichlorid,
Dimethylsilyl-(cyclopentadienyl)-(1-indenyl)-zirkondichlorid,
Isopropylen-(methylcyclopentadienyl)-(1-indenyl)-zirkondichlorid und
4-(η⁵-Cyclopentadienyl)-4,7,7-trimethyl-(η⁵-4,5,6,7-tetrahydroindenyl)zirkondichlorid.

Die für die Zwecke der Erfindung geeigneten Cycloolefincopolymere weisen Glastemperaturen auf zwischen 50 und 250° C, bevorzugt zwischen 100 und 200° C, besonders bevorzugt zwischen 100 und 150° C.

Die für die Zwecke der Erfindung geeigneten COC weisen Viskositätszahlen (bestimmt in Dekalin bei 135°C) auf zwischen 25 und 200 ml/g, bevorzugt zwischen 40 und 120 ml/g, besonders bevorzugt zwischen 40 und 80 ml/g.

Die in der erfindungsgemäßen Legierung enthaltenen Kern-Schale-Partikel können aus zwei (Kern und eine Schale) oder mehreren (Kern und mehrere Schalen) sich einander abwechselnden Schichten verschiedener Polymere bestehen. Gemeinsames Merkmal dieser Partikel ist, daß die einzelnen Schichten aus Polymeren mit unterschiedlichen Glastemperaturen bestehen. Das Polymer mit der niedrigen Glastemperatur wird dabei als Kautschukphase und das mit der höheren Glastemperatur als Hartphase bezeichnet. Die Herstellung solcher Partikel kann z.B. durch Emulsionspolymerisation erfolgen. Eine oder mehrere Schichten können während der Herstellung chemisch vernetzt werden, damit sich Form und Größe des Kern-Schale-Partikels beim anschließenden Legieren mit COC nicht verändern.

Als unvernetzte Grundmaterialien für die vernetzten Kautschukphasen kommen Polymersysteme in Frage, deren Glastemperaturen unterhalb von 0°C, bevorzugt unterhalb von -20°C und besonders bevorzugt unterhalb von -40°C liegen. Geeignet sind prinzipiell alle Polymere, die solche Glastemperaturen aufweisen und die zur Synthese von Kern-Schale-Partikeln geeignet sind.

Kern-Schale-Partikel, deren Kautschukphase niedrige Glastemperaturen aufweisen sind besonders geeignet zur Herstellung von Legierungen, die für Anwendungen bei tiefen Temperaturen eingesetzt werden.

Die Glastemperaturen der Kautschukphasen läßt sich häufig nicht für sich alleine messen, kann aber dadurch ermittelt werden, daß man ein Emulsionspolymerisat der betreffenden Monomerenzusammensetzung herstellt, isoliert, und die Glastemperatur bestimmt. Eine weitere Methode zur Bestimung der Glastemperaturen der Kautschukphasen besteht in der Messung von dynamisch mechanischen Eigenschaften der erfindungsgemäßen Legierungen und denen der Matrixpolymeren alleine. Maxima der Verlustfaktorkurven können als Maß für die Glastemperaturen angesehen werden.

Die für die Zwecke der Erfindung geeigneten Kern-Schale-Partikel enthalten Kautschukphasen in Volumen-%, bezogen auf das Gesamtvolumen der Partikel, zwischen 10 und 90, bevorzugt zwischen 20 und 70 und besonders bevorzugt zwischen 30 und 60.

Die für die Zwecke der Erfindung geeigneten Kern-Schale-Partikel enthalten Hartphasen in Volumen-%, bezogen auf das Gesamtvolumen der Partikel, zwischen 90 und 10, bevorzugt zwischen 80 und 30 und besonders bevorzugt zwischen 70 und 40.

Die für die Zwecke der Erfindung geeigneten Kern-Schale-Partikel enthalten Härtephasen in Volumen-%, bezogen auf das Gesamtvolumen der Partikel, zwischen 90 und 40, bevorzugt zwischen 80 und 30 und besonders bevorzugt zwischen 70 und 10.

Die Herstellung von Kern-Schale-Partikeln ist gut bekannt und zum Beispiel ausführlich beschrieben in US 3,833,682, US 3,787,522, DE 2 116 653, DE 22 53 689, DE 41 32 497, DE 41 31 738, DE 40 40 986, US 3,251,904, DE 33 00 526, auf die hiermit ausdrücklich Bezug genommen wird.

Als Kautschukphase der Kern-Schale-Partikel können Homo- oder Copolymere, bestehend aus zwei oder mehr Monomerentypen verwendet werden. Gemeinsames Merkmal dieser Homo- und Copolymere ist eine Glasstufe unterhalb von 0°C.

Dabei können die Homo- und Copolymere folgende Monomere enthalten: Konjugierte Dien-Monomere wie Butadien, Isopren, Chloropren, monoethylenische ungesättigte Monomere wie Alkyl- und Arylacrylate, wobei die Alkylreste linear, cyclisch oder verzweigt sein können und die Arylreste wiederum selbst substituiert sein können,
Alkyl- und Arylmethacrylate, wobei die Alkylreste linear, cyclisch oder verzweigt sein können und die Arylreste wiederum selbst substitutiert sein können,
Substituierte Alkyl- und Arylmethacrylate und Acrylate, wobei die Substituenten lineare, cyclische oder verzweigte Alkylreste oder substituierte Arylreste sein können,
Acrylnitrile und substituierte Acrylnitrile (z.B. Methacrylnitril, alpha-Methylenglutarnitril, alpha-Ethylacrylnitril, alpha-Phenylacrylnitril), Alkyl- und Arylacrylamide und substituierte Alkyl- und Arylacrylamide,
Vinylester und substituierte Vinylester,
Vinylether und substituierte Vinylether,
Vinylamide und substituierte Vinylamide,
Vinylketone und substituierte Vinylketone,
Vinylhalogenide und substituierte Vinylhalogenide,
Olefine, mit einer oder mehr ungesättigten Doppelbindungen, wie sie z.B. zur Herstellung von olefinischen Kautschuken Verwendung finden, insbesondere Ethylen, Propylen, Butylen und 1,4 Hexadien sowie
vinylaromatische Verbindungen wie Styrol, alpha-Methylstyrol, Vinyltoluol, Halogenstyrole und t-Butylstyrol.

Kautschukphasen auf der Basis von Organopolysiloxanen der nachfolgenden allgemeinen Formel können ebenso für den Aufbau von Kern-Schale-Partikeln verwendet werden, 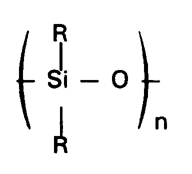
,wobei R gleiche oder verschiedene Alkyl- oder Alkenylreste mit 1 bis 10 C-Atomen, Arylreste oder substitutierte Kohlenwasserstoffreste bedeutet. Dabei können die Alkylreste und Alkenylreste linear, verzweigt oder cyclisch sein.

Weiterhin können Kautschukphasen auf der Basis von fluorierten monoethylenisch ungesättigten Verbindungen wie Tetrafluoroethylen, Vinylidenfluorid, Hexafluoropropen, Chlortrifluorethylen und Perfluoro(alkylvinylethern) verwendet werden.

Die Kautschukphasen können auch vernetzt sein, wozu sich polyfunktionelle ungesättigte Verbindungen wie sie zum Beispiel in DE 2 116 653, US 3,787,522 und EP 0 436 080 beschrieben sind (auf die hiermit ausdrücklich Bezug genommen wird), verwenden lassen. Ebenso in diesen Schriften beschrieben ist die Verwendung von Aufpfropfmonomeren. Diese Verbindungen werden eingesetzt um eine mögliche weitere Schale chemisch an die darunter liegende Phase anzubinden falls dies erwünscht ist.

Zur Erzielung von Legierungen mit guter Schlagzähigkeit auch bei tiefen Temperaturen werden Kern-Schale-Partikel bevorzugt, deren Kautschukphasen auf Butadien basieren.

Zur Erzielung von Legierungen mit guter Witterungsstabilität werden Kern-Schale-Partikel bevorzugt, deren Kautschukphasen auf Acrylsäureestern basieren.

Kern-Schale-Partikel, deren Kautschukphasen auf Organosiloxanen beruhen, werden bevorzugt, wenn die Legierungen gute Schlagzähigkeit bei tiefen Temperaturen, gute Witterungsstabilität und gute Stabilität bei der Herstellung und Verarbeitung aus der Schmelze miteinander vereinen sollen.

Für die Hartphasen der in der erfindungsgemäßen Legierung enthaltenen Kern-Schale-Partikel können Homo- und Copolymere verwendet werden. Die Copolymere können dabei aus zwei oder mehr Monomeren aufgebaut sein. Gemeinsames Merkmal der Homo- und Copolymere ist eine Glasstufe oberhalb von 50° C. Dabei können sich die Homo- und Copolymere von folgenden Monomeren ableiten:
Monoethylenisch ungesättigte Verbindungen, wie Alkyl- und Arylacrylate, wobei die Alkylreste linear, cyclisch oder verzweigt sein können und die Arylreste wiederum selbst substituiert sein können,
Alkyl- und Arylmethacrylate, wobei die Alkylreste linear, cyclisch oder verzweigt sein können und die Arylreste wiederum selbst substituiert sein können,
substituierte Alkyl- und Arylmethacrylate und Acrylate, wobei die Substituenten lineare, cyclische oder verzweigte Alkylreste oder substituierte Arylreste sein können,
Acrylnitrile und substituierte Acrylnitrile (z.B. Methacrylnitril, alpha-Methylenglutarnitril, alpha-Ethylacrylnitril, alpha-Phenylacrylnitril etc.), Alkyl- und Arylacrylamide,
Vinylester und substituierte Vinylester,
Vinylether und substituierte Vinylether,
Vinylamide und substitutierte Vinylamide,
Vinylketone und substituierte Vinylketone,
Vinylhalogenide und substituierte Vinylhalogenide,
Olefine (z.B. Ethylen, Propylen, Butylen), cyclische Olefine (z.B. Norbornen, Tetracyclododecen, 2-Vinylnorbornen),
fluorierte monoethylenisch ungesättigte Verbindungen wie Tetrafluoroethylen, Vinylidenfluorid, Hexafluoropropen, Chlortrifluorethylen und Perfluoro(alkylvinylether) sowie
vinylaromatische Verbindungen der allgemeinen Formel: 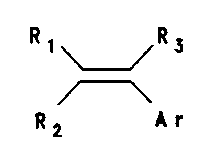
,wobei R₁, R₂, R₃ Wasserstoff, lineare, verzweigte oder cyclische Alkylreste, substituierte bzw. unsubstituierte Arylreste sind, die gleich oder verschieden sein können und Ar einen aromatischen C₆-C₁₈-Rest bedeutet, der zusätzlich noch Substituenten wie Alkyl-, oder Halogenreste tragen kann.

Auch die Hartphasen können vernetzt sein, wozu sich polyfunktionelle ungesättigte Verbindungen wie sie zum Beispiel in DE 2 116 653, US 3,787,522 und EP 0436 080 beschrieben sind eignen. Ebenso in diesen Schriften beschrieben ist die Verwendung von Aufpfropfmonomeren. Diese Verbindungen werden eingesetzt, um eine mögliche weitere Schale chemisch an die darunter liegende Phase anzubinden, falls dies erwünscht ist.

Als unvernetzte Grundmaterialien für die Hartphasen kommen alle Polymere in Frage mit Glastemperaturen oberhalb von 50°C, bevorzugt oberhalb von 80°C und besonders bevorzugt oberhalb von 100°C.

Die erfindungsgemäße Legierung kann auch kommerziell erhältliche Kern-Schale-Partikel enthalten, beispielsweise
Staphyloid - Typen der TAKEDA Chem. Industries wie z.B. die in JP 17514 oder JP 129266 beschriebenen,
Kane-Ace-Typen der KANEKA, die z.B. beschrieben sind in der Produktbroschüre Kane ACE-B,
Metablen C, Metablen W und Metablen E - Typen der METABLEN Company BV, die beschrieben sind in der Produktbroschüre Metablen,
Blendex - Typen der GE PLASTICS oder
Paraloid-Typen der ROHM and HAAS, die z.B. beschrieben sind in Gächter/Müller Kunststoff-Additive, Carl Hanser München (1983) Seite XXIX ff. oder der Broschüre PARALOID BTA 733, Impact Modifier for Clear Packaging (1987) von Rohm and Haas oder der Broschüre PARALOID BTA-III N2 BTA-702 BTA 715 (1989) von Rohm and Haas.

Die erfindungsgemäße Legierung enthält 2 bis 50 Gew.-%, bevorzugt 10 bis 40 Gew.-% und besonders bevorzugt 10 bis 25 Gew.-% Kern-Schale-Partikel, bezogen auf die Gesamtmasse der Legierung.

Die in der erfindungsgemäßen Legierung enthaltenen Blockcopolymere, enthalten einen oder mehrere Blocktypen mit einer Glastemperatur > 40°C und einen oder mehrere Blocktypen mit einer Glastemperatur < -20°C. Bevorzugt sind COC-Strukturpolymere, in denen sich Blöcke unterschiedlichen Cycloolefingehalts abwechseln (EP 560 090, auf die hier ausdrücklich Bezug genommen wird), und Blockcopolymere, die durch anionische Polymerisation erhalten werden. Bevorzugt sind Di- und Triblockcopolymere.

Die Blocktypen mit einer Glastemperatur > 40°C bestehen bevorzugt aus Polymeren, die durch anionische Polymerisation hergestellt werden, z.B. Polystyrol, Polyestern oder Polyurethanen. Die Blocktypen mit einer Glastemperatur < -20°C bestehen bevorzugt aus Homo- oder Copolymeren, welche Polybutadien, Polysiloxene, Polyisopren, hydriertes Polybutadien oder hydriertes Polyisopren enthalten.

Bevorzugte Blockcopolymere sind Styrol-Butadien-Diblockcopolymere, Styrol-Butadien-Styrol-Triblockcopolymere, Styrol-Isoprene-Diblockcopolymere, Styrol-Isopren-Styrol-Triblockcopolymere sowie hydrierte Produkte derselben, wie auch kommerziell erhältliche Blockcopolymere wie Cariflex der Shell Chemicals (Cariflex Produktbroschüre vom Februar 1992), Kraton G (Kraton G Produktbroschüre der Shell International Company London), Kraton (Kraton Produktbroschüre 1992 der Shell International Company London), Polysar (Polysar Produktbroschüre der Bayer) und SEP/SEPS (SEP/SEPS Produktbroschüre der Kuraray Co.).

Die erfindungsgemäße Legierung enthält 1 bis 20 Gew.-%, bevorzugt 1 bis 10 Gew.-% und besonders bevorzugt 1 bis 5 Gew.-% Blockcopolymere, bezogen auf die Gesamtmasse der Legierung.

Für die Erzielung einer möglichst hohen Transparenz der erfindungsgemäßen Legierung sind Kern-Schale-Partikel und Blockpolymere mit mittleren Brechungsindizes (Volumenmittelwert) zwischen 1,52 und 1,55, bevorzugt zwischen 1,53 und 1,54 geeignet. Die Auswahl optimaler Partikelbrechungsindizes und Radienverhältnisse der Kern-Schale-Partikel kann bestimmt werden gemäß Makromol. Chem. 183 (1990) 221 für Partikel aus einem Kern und einer Schale bzw. gemäß M.Kerker, The Scattering of Light, Academic Press (1969) Kapitel 5.4 für Mehrschalenpartikel. Insbesondere Kern-Schale-Modifikatoren mit einer Mehrschichtstruktur, die aus einem Kern und mehreren Schalen bestehen, sind besonders geeignet, um transparente schlagzähe Legierungen zu erhalten.

Die erfindungsgemäße Legierung wird hergestellt bei Temperaturen oberhalb der Glastemperatur des COC zwischen 60 und 350°C, bevorzugt zwischen 100 und 150°C und besonders bevorzugt zwischen 110 und 130°C.

Die erfindungsgemäße Legierung kann hergestellt werden durch übliche Verfahren (D.D. Walsh, Comprehensive Polymer Science, Pergamon Press (1989), Kapitel 5.2; J.L. White and K. Min, Comprehensive Polymer Science, Pergamon Press, (1989), Seite 285ff). Insbesondere können die Komponenten in Form von Pulvern oder Granulaten durch gemeinsame Extrusion aus der Schmelze zu Granulaten oder Chips verarbeitet werden, die anschließend in geformte Gebilde überführt werden können, z.B. durch Pressen, Extrudieren oder Spritzgießen. Insbesondere eignet sich die erfindungsgemäße Legierung zur Herstellung spritzgegossener, spritzgeblasener, extrusionsgeblasener oder extrudierter Formkörper. Außerdem können auch Folien und Fasern hergestellt werden.

Die erfindungsgemäße Legierung kann insbesondere hergestellt werden über sogenannte master batches. Hierbei werden Kern-Schale-Partikel in Mengen von 20 bis 80 Gew.-%, bezogen auf die Gesamtmasse der Legierung, mit einem oder mehreren COC und einem oder mehreren Blockcopolymeren gemischt (bevorzugt durch gemeinsame Extrusion) und anschließend auf die gewünschte Endkonzentration durch erneutes Mischen (bevorzugt durch gemeinsame Extrusion) mit einem oder mehreren COC und einem oder mehreren Blockcopolymeren gebracht. Diese Methode führt zu einer guten Dispergierung der Kern-Schale-Partikel und wird bevorzugt verwendet, wenn Legierungen mit Gehalten von 3 bis 25 Gew.-% Kern-Schale-Partikel, bezogen auf die Gesamtmasse der Legierung, hergestellt werden.

Die erfindungsgemäße Legierung weist Reißdehnungen von 4 bis 200%, bevorzugt 5 bis 100%, besonders bevorzugt 10 bis 30% und Kerbschlagzähigkeiten von 2,5 bis 100 KJ/m², bevorzugt von 4 bis 50 KJ/m², besonders bevorzugt von 10 bis 30 KJ/m² auf.

Die erfindungsgemäße Legierung kann Additive in üblichen Mengen enthalten wie z.B. Plastifiziermittel, UV-Stabilisatoren, optische Aufheller, Antioxidantien, Antistatika, Wärmestabilisatoren oder verstärkende Zusätze wie Glasfasern, Kohlefasern oder Hochmodulfasern wie Polyaramide oder flüssigkristalline Polyester oder ähnliche. Außerdem können sie Füllstoffe wie anorganische Materialien, Talkum, Titandioxid oder ähnliches enthalten.

Die erfindungsgemäße Legierung eignet sich für eine Vielzahl von Anwendungen wie Behälter, Flaschen, Getränkebecher, medizintechnische Anwendungen wie Blisterverpackungen oder Spritzgußteile für Anästhesie, Beatmung, Pädiatrie oder medizinische Versorgungseinrichtungen, Haushaltsgüter wie Besteck, Mikrowellengeschirr, Gefrierdosen, Schüsseln, Wannen, insbesondere Badewannen, Wäscheklammern, Klobrillen, Wasserhähne, Möbel, Koffer, insbesondere Schalenkoffer, Blumentöpfe, Deckel und Verschlüsse für Flaschen, Spielwaren wie Bauklötze oder Tretautos, Extrusionsfolien z.B. für Verpackungen, Kondensatoranwendungen, Abdeckplanen, Bautechnische Anwendungen wie Fensterprofile, Panelen, Falttüren, Jalousien, Fußbodenbeläge, Luftfahrttechnische Anwendungen wie Flugzeuginnenausstattung, Fasern für Textilien, Gehäuse von elektrischen Geräten wie Drucker, Bildschirme, Tastaturen, Rechner, Telefon, HIFI-Geräten, Lampengehäuse, Schlagbohrmaschinen, Bandschleifer, Schwingschleifer, Kreissäge, Anwendungen bei tiefen Temperaturen wie Kühlschrankeinsätze oder Gefrierschrankteile, Kabelummantelungen, Rohre, Sportausrüstungen wie Schutzhelme, Bootsrümpfe, Surfboards, Inneneinrichtungen von Automobilen wie Auskleidungen oder Armaturenbretter, Außeneinrichtungen von Automobilen wie Stoßfänger oder Radkappen, Halbzeug wie Dichtungen, Rohrverbinder oder Kabelbinder.

Die erfindungsgemäße Legierung weist eine hohe Biegefestigkeit und eine gute Schmelzestabilität auf. Sie zeigt eine gute Bindenahtfestigkeit und eine hohe Fließfähigkeit, was insbesondere für Spritzgußanwendungen von Vorteil ist. Die mechanischen Eigenschaften wie z.B. Wärmeformstabilität, Reißdehnung und Kerbschlagzähigkeit lassen sich in weiten Bereichen variieren, so daß vielfältige Anwendungsbereiche zugänglich sind. Die erfindungsgemäße Legierung kann hergestellt werden, ohne daß eine in aufwendigen Tests vorzunehmende Optimierung der Kern-Schale-Partikel für das COC notwendig ist. Außerdem ist die Verarbeitung und Herstellung der Legierung technisch einfach durchzuführen.

### Beispiele

Die Cycloolefincopolymere, Kern-Schale-Partikel und die Blockcopolymere wurden zunächst getrocknet (90°C, 24h, verminderter Druck) und anschließend in verschiedenen Gewichtsverhältnissen in einem Extruder (Firma Haake, Rheocord System 90 / Rheomex TW 100, Karlsruhe, Deutschland) unter Schutzgas (Argon) gemeinsam extrudiert. Die in Form von Granulat erhaltenen Legierungen wurden erneut wie oben angegeben getrocknet und anschließend unter Schutzgas (Argon) zu Zugstäben, Schlagstäben und Platten spritzgegossen. Es wurde eine Spritzgußmaschine KM 90-210 B der Firma Krauss - Maffei, München, Deutschland benutzt. Physikalische Eigenschaften der Cycloolefincopolymere und deren Legierungen wurden wie folgt charakterisiert.

Glastemperaturen wurden unter Verwendung eines Differentialkalorimeters DSC 7 der Firma Perkin Elmer, Überlingen, Deutschland bestimmt. Die Heizrate betrug 20° C/min.

Zur Bestimmung mechanischer Eigenschaften wie Elastizitätsmoduln, Reißdehnungen und Zugfestigkeiten gemäß DIN 53455 (Zug - Dehnungs - Eigenschaften) wurde eine Zug-Dehungs-Maschinen 4302 der Firma Instron, Offenbach, Deutschland eingesetzt.

Kerbschlagzähigkeiten wurden mittels eines instrumentierten Schlagpendels 5102 der Firma Zwick, Ulm, Deutschland gemäß DIN 53453 gemessen.

Schmelzviskositäten wurden bestimmt unter Verwendung eines Rheometers RDS der Firma Rheometrics, Piscataway, NJ, USA.

Viskositätszahlen der verwendeten COC wurden gemäß DIN 53728 bestimmt (Dekahydronaphthalin, 135°C).

3-Punkt-Biegeversuche wurden gemäß DIN 53452/53457 an spritzgegossenen Prüfkörpern durchgeführt.

Es wurden folgende, kommerziell erhältliche Kern-Schale-Partikel verwendet:
®Kane Ace M511, Kaneka, ®Paraloid EXL 2600, Rohm und Haas
®Kane Ace B56, Kaneka
®Kane Ace B582, Kaneka.

Es wurden folgende, kommerziell erhältliche Blockcopolymere verwendet:
®Cariflex TR 1102, Shell

Es wurden folgende COC verwendet:
1) COC 1
   Ein sauberer und trockener 75 dm³ Polymerisationsreaktor mit Rührer wurde mit Stickstoff und dann mit Ethylen gespült und mit 24 kg Norbornen (Massepolymerisation) gefüllt. Es wurden 300 ml Triisobutylaluminiumlösung (20 % w/w in Toluol) zugegeben. Der Ethylendruck wurde auf 20 bar Überdruck eingestellt. Die Reaktionstemperatur wurde auf 70°C eingestellt. 20 mg Isopropenyl(cyclopentadienyl)(1-indenyl)-zirkondichlorid wurden in 500 ml einer toluolischen Methylaluminiumoxanlösung (10 Gew.-% Methylaluminoxan mit Molmasse 1300 g/Mol nach kryoskopischer Bestimmung) gelöst und anschließend in den Reaktor dosiert. Der Ethylendruck wurde durch Nachdosieren bei 20 bar gehalten. Nach 90 Minuten Polymerisationszeit wurde der Reaktorinhalt in einen 150 dm³ Rührkessel abgelassen, in dem 500 g Celite und 200 ml Wasser in 50 dm³ einer hydrierten Dieselölfraktion (®Exxsol, Siedebereich 100 bis 120°C von Exxon) vorgelegt wurden. Bei 60°C wurde 20 Minuten gerührt.
   Auf dem Filtergewebe einer 120 dm³ Drucknutsche wurde ein Filterkuchen aus 500 g Celite suspendiert in 10 dm³ ®Exxsol aufgebaut. Die Polymerlösung wurde über die Drucknutsche filtriert. Über der Lösung wurde ein Stickstoffdruck von 2,8 bar aufgebaut.
   Anschließend wurde über sieben Filterkerzen (Fluid Dynamics, Dynalloy XS 64,5 µm 0,1 m²/Kerze) die in einem Stahlgehäuse montiert wurden, filtriert. Die Polymerlösung wurde mittels eines Dispergators (Ultraturrax) in 500 dm³ Aceton eingerührt und dabei gefällt. Die Suspension wurde über eine 680 dm³ Rührdrucknutsche bei geöffnetem Bodenventil im Kreis gefördert. Nach Schließen des Bodenventils wurde dreimal mit 200 dm³ Aceton gewaschen. Das Produkt wurde nach der letzten Wäsche im Stickstoffstrom bei 60°C vorgetrocknet und im Trockenschrank 24 Stunden bei 0,2 bar und 80°C getrocknet. Es wurden 5,37 kg COC 1 erhalten. Die VZ betrug 55 ml/g und die Glastemperatur 143°C.
2) COC 2 ist ein kommerziell erhältliches Produkt der Mitsui Petrochemical (®Apel 6015), das durch Copolymerisation von Tetracyclododecen und Ethylen in Gegenwart von VOCl₂(OC₂H₅) als Übergangsmetallverbindung hergestellt wird.

### Beispiel 1:

Die nachfolgenden Tabellen zeigen die Kerbschlagzähigkeiten und Elastizitätsmoduln von reinen COC sowie ternären und quarternären COC/Kern-Schale-Partikel/Blockcopolymer-Legierungen. Die Prozentangaben sind Gewichtsprozent, bezogen auf die Gesamtmasse der Legierung.

| COC | Kern-Schale-Partikel | Blockcopolymer | Kerbschlagzähigkeit (kJ/m²) | Modul(GPa) |
|---|---|---|---|---|
| COC 1 | - | - | 1,9 | 3,2 |
| COC 1 | M511 (16%) | TR 1102 (4 %) | 10,3 | 2,1 |
| COC 1 | M511 (20%) | - | 8,9 | 2,1 |
| COC 1 | B56 (16 %) | TR 1102 (4 %) | 7,5 | 2,0 |
| COC 1 | B56 (10 %) | - | 5,7 | 2,1 |
| COC 1 | EXL 2600 (8 %) | TR 1102 (2 %) | 3,6 | 2,6 |
| COC 1 | EXL 2600 (16%) | TR 1102 (4 %) | 6,9 | 2,2 |
| COC 1 | EXL 2600 (20%) | - | 2,7 | 2,2 |

| COC | Kern-Schale-Partikel | Block-copolymer | Kerbschlagzähigkeit(kJ/m² ) | Modul (GPa) |
|---|---|---|---|---|
| COC 1 (35%)/COC 2 (45%) | B582 (16%) | TR1102(4%) | 5,4 | 2,1 |
| COC 1(35%)/COC 2 (45%) | B582 (8 %) | TR1102(2%) | 3,4 | 2,6 |
| COC 1(35%)/COC 2 (45%) | B582 (20%) | - | 2,9 | 2,2 |

### Beispiel 2

Es wurden im Gewichtsverhältnis 50 zu 50 folgende Polymere in einem Haake-Extruder vermengt: COC1/PMMA, COC1/PMMA, COC1/PMMA, COC1/Polystyrol, COC1/Polystyrol, COC1/Polystyrol, COC1/Polycarbonat, COC1/Polycarbonat, COC1/Polycarbonat.
In allen Fällen wurden mittels DSC-Messungen (Perkin Elmer DSC-7 Überkingen Deutschland) die unveränderten Glastemperaturen der beiden Komponenten gefunden.

## Patentansprüche

1. Polymer-Legierung, dadurch gekennzeichnet, daß sie enthält a) eines oder mehrere Cycloolefincopolymere, b) einen oder mehrere Typen von Kern-Schale-Partikeln und c) eines oder mehrere Blockcopolymere.

2. Polymer-Legierung gemäß Anspruch 1, dadurch gekennzeichnet, daß sie ein Cycloolefincopolymer enthält.

3. Polymer-Legierung gemäß Anspruch 1, dadurch gekennzeichnet, daß das Cycloolefincopolymer enthält, 0,1 - 99 Gew.-%, bezogen auf die Gesamtmasse des Cycloolefincopolymers, an Struktureinheiten, die durch Polymerisation mindestens eines polycyclischen Olefins erhalten werden, 0 bis 95 Gew.-%, bezogen auf die Gesamtmasse des Cycloolefincopolymers, an Struktureinheiten, die durch Polymerisation eines monocyclischen Olefins erhalten werden, und 0 bis 99 Gew.-%, bezogen auf die Gesamtmasse des Cycloolefincopolymers, an Struktureinheiten enthalten, die durch Polymerisation mindestens eines acyclischen Olefins erhalten werden.

4. Polymer-Legierung gemäß Anspruch 1, dadurch gekennzeichnet, daß das Cycloolefincopolymer enthält, 0,1 - 99 Gew.-%, bezogen auf die Gesamtmasse des Cycloolefincopolymers, an Struktureinheiten, die durch Polymerisation mindestens eines Monomeren der Formeln I, II, III, IV, V und VI erhalten werden 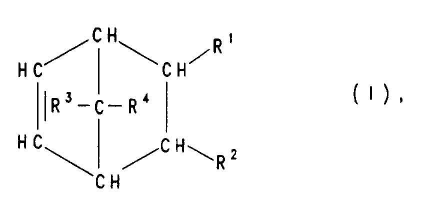 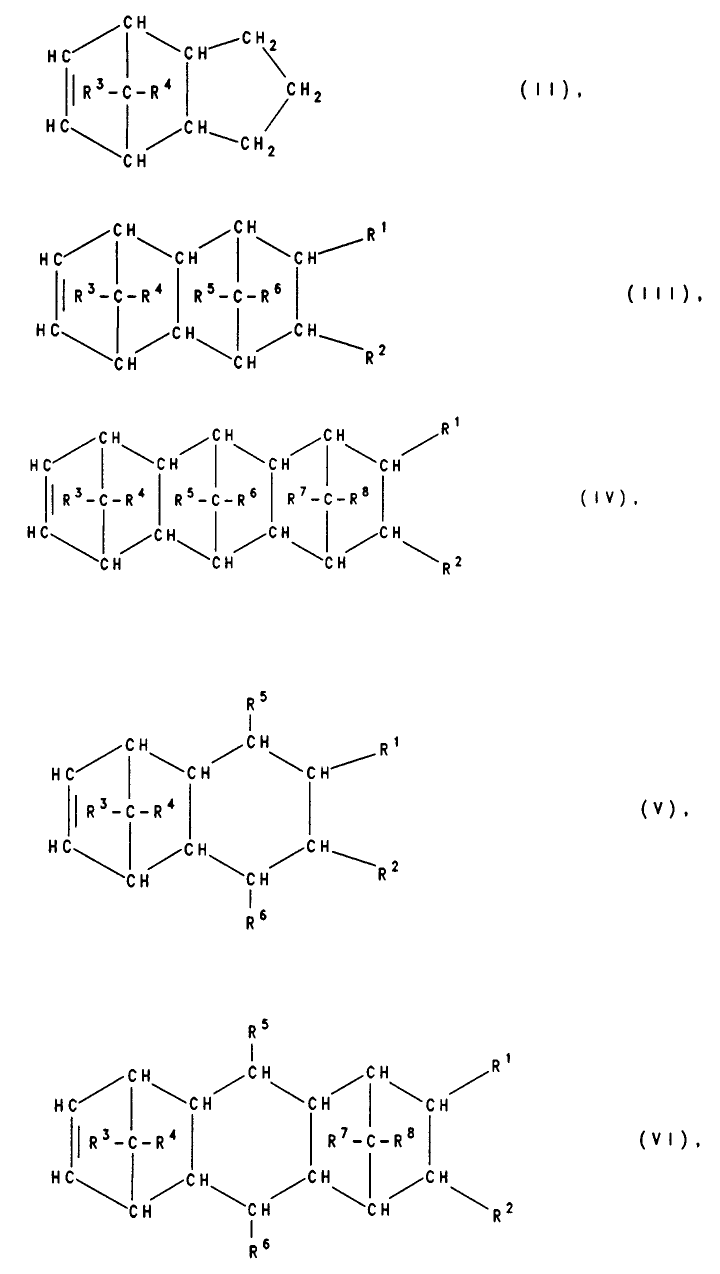 worin die Reste R¹, R², R³, R⁴, R⁵, R⁶, R⁷ und R⁸ gleich oder verschieden sind und ein Wasserstoffatom oder einen C₁-C₂₀-Kohlenwasserstoffrest bedeuten, oder zwei oder mehr Reste R¹ bis R⁸ einen Ring bilden, und die Reste R¹ bis R⁸ in den verschiedenen Formeln I bis VI eine unterschiedliche Bedeutung haben können,
0 bis 95 Gew.-%, bezogen auf die Gesamtmasse des Cycloolefincopolymers, an Struktureinheiten, die durch Polymerisation mindestens eines monocyclischen Olefins der Formel VII erhalten werden 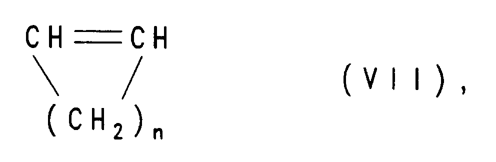 worin n eine Zahl von 2 bis 10 ist, und
0 bis 99 Gew.-%, bezogen auf die Gesamtmasse des Cycloolefincopolymers, an Struktureinheiten enthalten, die durch Polymerisation mindestens eines acyclischen Olefins der Formel VIII erhalten werden 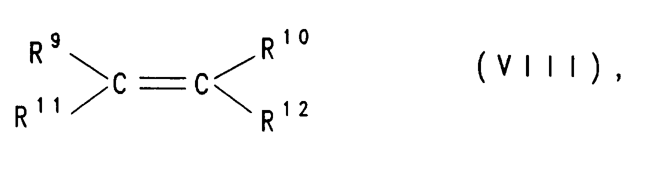 worin R⁹, R¹⁰, R¹¹ und R¹² gleich oder verschieden sind und ein Wasserstoffatom oder einen C₁-C₂₀-Kohlenwasserstoffrest bedeuten.

5. Verfahren zur Herstellung einer Polymer-Legierung, dadurch gekennzeichnet, daß a) eines oder mehrere Cycloolefincopolymere, b) einer oder mehrere Typen von Kern-Schale-Partikeln und c) eines oder mehrere Blockcopolymere miteinander gemischt werden.

6. Verfahren gemäß Anspruch 5, dadurch gekennzeichnet, daß a) eines oder mehrere Cycloolefincopolymere, b) einer oder mehrere Typen von Kern-Schale-Partikeln und c) eines oder mehrere Blockcopolymere zu einem master-batch gemischt werden, und die resultierende Mischung mit einem oder mehreren Cycloolefincopolymeren gemischt wird.

7. Verwendung einer Polymer-Legierung, gemäß einem oder mehreren der Ansprüche 1 bis 4, zur Herstellung von Formkörpern.

8. Formkörper, enthaltend eine Polymer-Legierung, dadurch gekennzeichnet, daß die Polymer-Legierung enthält a) eines oder mehrere Cycloolefincopolymere, b) einen oder mehrere Typen von Kern-Schale-Partikeln und c) eines oder mehrere Blockcopolymere.
